(19) Europäisches Patentamt
European Patent Office
Office européen des brevets

(11) **EP 1 925 420 B1**

(12) **EUROPEAN PATENT SPECIFICATION**

(45) Date of publication and mention
of the grant of the patent:
**17.04.2013 Bulletin 2013/16**

(51) Int Cl.:
*B29C 33/56* (2006.01)       *B29C 45/37* (2006.01)
*B29C 45/56* (2006.01)       *B29K 29/00* (2006.01)

(21) Application number: **07767238.4**

(22) Date of filing: **20.06.2007**

(86) International application number:
**PCT/JP2007/062399**

(87) International publication number:
**WO 2008/032484 (20.03.2008 Gazette 2008/12)**

(54) **METHOD OF MOLDING POLYLACTIC ACID RESIN**

FORMVERFAHREN FÜR POLYMILCHSÄUREHARZ

PROCÉDÉ DE MOULAGE DE RÉSINE D'ACIDE POLYLACTIQUE

(84) Designated Contracting States:
**DE FR GB**

(30) Priority: **13.09.2006 JP 2006247711**
**23.10.2006 JP 2006287044**

(43) Date of publication of application:
**28.05.2008 Bulletin 2008/22**

(73) Proprietor: **Panasonic Corporation**
**Kadoma-shi**
**Osaka 571-8501 (JP)**

(72) Inventors:
• **ISOMI, Akira**
**c/oMatsushita Electric Industrial Co.,Ltd**
**IP Development Center**
**Shiromi, Chuo-ku**
**Osaka 540-6207 (JP)**
• **NUNOSE, Hiroki**
**c/oMatsushita Electric Industrial Co.,Ltd**
**IP Development Center**
**Shiromi, Chuo-ku**
**Osaka 540-6207 (JP)**
• **TABATA, Daisuke**
**c/oMatsushita Electric Industrial Co.,Ltd**
**IP Development Center**
**Shiromi, Chuo-ku**
**Osaka 540-6207 (JP)**

• **KOJIMA, Tamao**
**c/oMatsushita Electric Industrial Co.,Ltd**
**IP Development Center**
**Shiromi, Chuo-ku**
**Osaka 540-6207 (JP)**
• **NISHIKAWA, Kazutaka**
**c/oMatsushita Electric Industrial Co.,Ltd**
**IP Development Center**
**Shiromi, Chuo-ku**
**Osaka 540-6207 (JP)**
• **NAKA, Hiroyuki**
**c/oMatsushita Electric Industrial Co.,Ltd**
**IP Development Center**
**Shiromi, Chuo-ku**
**Osaka 540-6207 (JP)**

(74) Representative: **Grünecker, Kinkeldey,**
**Stockmair & Schwanhäusser**
**Leopoldstrasse 4**
**80802 München (DE)**

(56) References cited:
EP-A1- 1 460 107          WO-A1-2005/007373
JP-A- 7 001 100           JP-A- 05 329 866
JP-A- 05 329 866          JP-A- 10 000 662
JP-A- 10 000 662          JP-A- 2003 011 159
JP-A- 2005 144 702        JP-A- 2005 144 702
US-A- 4 288 398

**Description**

Technical Field

The present invention relates to a molding method of polylactic resin and particularly relates to a molding method of polylactic resin for fabricating a container or package having a transparent part.

Background Art

Conventionally, resins such as polystyrene, polyethylene terephthalate, polyethylene, and polyvinyl chloride which are produced from petroleum have been used as materials of commercial containers and packages. Since these resins are chemically stable, these resins are not decomposed even in a natural environment and are physically and chemically kept in substantially the same shapes, leading to waste problems.

Further, when resins produced from petroleum are burned, carbon originally buried in the ground is released into the atmosphere. Thus carbon dioxide collecting in the atmosphere increases and causes global warming.

In recent years, from the viewpoint of these environmental problems, polylactic resin has received attention as a biodegradable and plant-derived resin. Polylactic resin is decomposed over time in a natural environment and can be recycled by composting and so on. Further, polylactic resin is produced from plants. The plants absorb carbon dioxide in the atmosphere through photosynthesis during the growth thereof. Thus, even if polylactic resin is burned, thereby emitting carbon dioxide, carbon dioxide in the atmosphere is not increased in theory. Thus polylactic resin is an effective solution to global warming.

Polylactic resin can be obtained by polymerizing lactic acid that is obtained by fermenting glucose decomposed from starch made of plant-derived materials such as corn. Polylactic resin has high transparency and excellent mechanical properties but has low heat resistance.

Polylactic resin is a crystalline resin and can have higher heat resistance by crystallization. However, the crystallization rate of polylactic resin is low and thus a molded body obtained by typical injection molding and so on tends to have a low degree of crystallinity, so that the heat resistance cannot be improved.

As a method of increasing the crystallization rate and the degree of crystallinity of polylactic resin and improving the heat resistance, a method of adding a crystal nucleating agent is known. As a crystal nucleating agent of polylactic resin, talc, Kaolin, clay, silica, and inorganic compounds such as boron nitride have been disclosed (see Patent Documents 1 and 2).

Further, properties such as heat resistance improved by mixing an aromatic polycarbonate resin and an additive with polylactic resin have been disclosed (see Patent Document 3).

Moreover, as a molding method of crystallizing polylactic resin in a short time without the need for changing the composition or adding foreign matter, a molding method has been disclosed in which molten polylactic resin is charged by injection, is cooled to the recrystallization temperature or lower, is heated to the recrystallization temperature or higher before being held, and then is cooled before a molded component is removed (see Patent Document 4).

Patent Document 1: Japanese Patent Laid-Open No. 08-03432

Patent Document 2: Japanese Patent Laid-Open No. 2005-200600

Patent Document 3: Japanese Patent Laid-Open No. 2006-182994

Patent Document 4: Japanese Patent Laid-Open No. 2005-169925

Document EP-A-1460107 discloses a method of molding polylactic resin by injecting it into a mold cavity.

Disclosure of the Invention

However, when polylactic resin having low heat resistance is used for a container or a package and is exposed to an elevated temperature of at least 60°C for a long time during storage and transportation, thermal deformation may occur.

Further, in the method of adding an inorganic filler to improve the heat resistance of polylactic resin, the addition of filler may reduce the transparency. Thus this method cannot be used when high transparency and heat resistance are necessary.

Moreover, in the method of mixing a polycarbonate resin and the like to improve the heat resistance of polylactic resin, the biodegradability of polylactic resin may decrease.

Further, in the molding method of charging molten polylactic resin by injection, cooling the polylactic resin to the recrystallization temperature or lower, heating the polylactic resin to the recrystallization temperature or higher before holding the polylactic resin, and then cooling the polylactic resin before a molded component is removed, the transparency may decrease.

In view of these conventional problems, an object of the present invention is to provide a molding method of polylactic resin by which a container or package having a transparent part can be fabricated with high heat resistance.

A molding method of polylactic resin according to claim 1 of the present invention includes: charging molten polylactic resin into a cavity formed of molds; adding vibrations to the polylactic resin having been injected into the cavity, when the polylactic resin having been injected into the cavity has a temperature ranging from the glass transition point to the melting point of the polylactic resin; and applying a held pressure to the polylactic resin in the cavity after the addition of vibrations is completed.

A molding method of polylactic resin according to claim 2 of the present invention, in claim 1, wherein the temperature at which the vibrations are added to the polylactic resin having been injected into the cavity ranges from 100°C to a temperature at which the charging of the polylactic resin is completed.

A molding method of polylactic resin according to claim 3 of the present invention, in one of claims 1 and 2, wherein the vibrations at 10 kHz to 100 kHz are added.

A molding method of polylactic resin according to claim 4 of the present invention, in any one of claims 1 to 3, wherein the vibrations are added on positions for accelerating the crystallization of the polylactic resin having been injected into the cavity.

A molding method of polylactic resin according to claim 5 of the present invention, in claim 4, wherein the vibrations are added on positions corresponding to the outer wall of a molded body formed of the polylactic resin having been injected into the cavity.

A molding method of polylactic resin according to claim 6 of the present invention, in any one of claims 1 to 5, further including: forming paint containing a crystal nucleating agent on mold surfaces forming the cavity.

A molding method of polylactic resin according to claim 7 of the present invention, in claim 6, wherein the crystal nucleating agent is one of talc, kaoline, silica, and boron nitride.

A molding method of polylactic resin according to claim 8 of the present invention, including: charging molten polylactic resin into molds on which paint containing a crystal nucleating agent is formed, the paint being formed on mold surfaces forming a cavity for molding a molded body; and holding the injected polylactic resin by the molds.

A molding method of polylactic resin according to claim 9 of the present invention, in claim 8, wherein the injected polylactic resin is held by the molds while vibrations are added to the mold.

A molding method of polylactic resin according to claim 10 of the present invention, in one of claims 8 and 9, wherein the crystal nucleating agent is one of talc, kaoline, silica, and boron nitride.

According to the molding method of polylactic resin of the present invention, a container or package having a transparent part with high heat resistance can be molded of polylactic resin.

Further, according to the molding method of polylactic resin of the present invention, paint containing a high-concentration crystal nucleating agent is formed in molds, so that the contact of the high-concentration crystal nucleating agent with the polylactic resin increases the crystallization rate and a molded body can be obtained in a short time as compared with the case where the crystal nucleating agent is added to the polylactic resin. Moreover, the surface layer portion of the molded body can have a higher degree of crystallinity than the central portion of the molded body, thereby achieving a molded body with higher strength and heat resistance.

Brief Description of the Drawings

FIG. 1A is a sectional view showing opened molds used for implementing a molding method of polylactic resin according to a first embodiment of the present invention;

FIG. 1B is a sectional view showing closed molds used for implementing the molding method of polylactic resin according to the first embodiment of the present invention;

FIG. 2 is a block diagram showing a molding machine according to the first embodiment;

FIG. 3 is a flowchart showing the molding machine according to the first embodiment;

FIG. 4 is an explanatory drawing showing a specific example of a screw position, an injection pressure, and a cavity temperature in the steps of the first embodiment;

FIG. 5 is a perspective view showing a molded body and the vibration positions of vibrators according to the first embodiment;

FIG. 6 is a schematic sectional view showing a molding device for implementing a molding method of polylactic resin according to a second embodiment of the present invention;

FIG. 7 shows that paint containing a crystal nucleating agent is applied;
FIG. 8 is a schematic drawing showing the molded body in the molding device; and
FIG. 9 is a sectional view showing a molded body of polylactic resin according to the second embodiment.

Best Mode for Carrying Out the Invention

A molding method of polylactic resin of the present invention will be now described according to specific embodiments.

(First Embodiment)

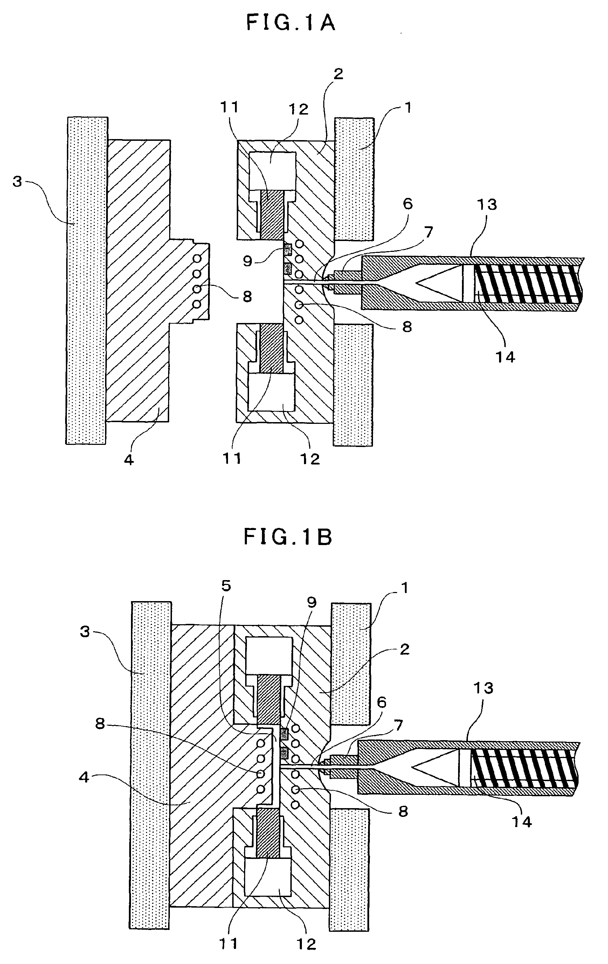

FIG. 1 shows molds used for implementing the molding method of the present invention. FIG. 1A shows the opened molds and FIG. 1B shows the closed molds.

The molds include a stationary mold 2 attached to a stationary mold clamping plate 1 and a movable mold 4 attached to a movable mold clamping plate 3. The stationary mold 2 and the movable mold 4 are closed to form a cavity 5. A nozzle 7 for injecting resin for molding into the cavity 5 is connected to a sprue 6 of the stationary mold 2. In the stationary mold 2 and the movable mold 4, heating/cooling water channels 8 are formed around the cavity 5.

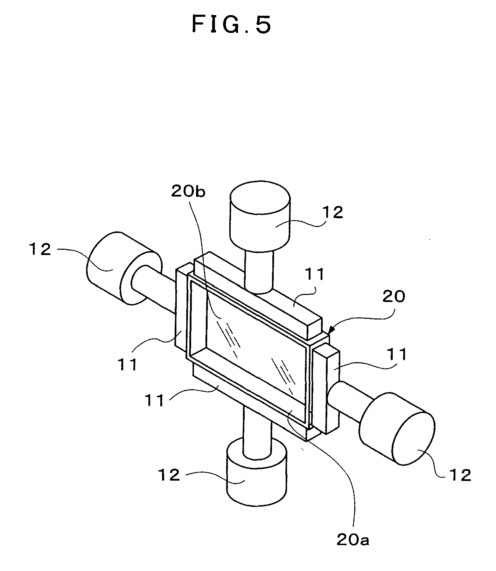

The cavity 5 has a shape necessary for molding a molded body 20 of FIG. 5. To be specific, a molded body 20 to be molded has a bottom 20b that is quadrilateral in a plane and includes an outer wall 20a. The bottom 20b has to be transparent. The outer wall 20a does not have to be as transparent as the bottom 20b.

The mold includes a temperature sensor 9 and vibrators 12. The temperature sensor 9 is disposed in the stationary mold 2 so as to make contact with a surface of the cavity 5. The vibrators 12 are placed in the stationary mold 2 so as to add vibrations to the four sides of the cavity 5 through horns 11 connected to the vibrators 12. To be specific, the horns 11 and the vibrators 12 are disposed on four points around the outer wall 20a so as to correspond to the outer wall 20a not requiring high transparency in the molded body. Further, the horns 11 and the vibrators 12 are so fixed as to be set on predetermined positions in the stationary mold 2 while resisting a molding pressure applied to the surfaces of the cavity 5.

In this configuration, the temperature sensor 9 is disposed on the stationary mold 2 and the temperature of polylactic resin injected into the cavity 5 is indirectly detected as a cavity temperature. The temperature sensor 9 may be disposed on the movable mold 4 or both of the stationary mold 2 and the movable mold 4 to detect the temperature of polylactic resin. When multiple temperature sensors 9 are provided, as a temperature of polylactic resin injected into the cavity 5, the detected value of the temperature sensor 9 on a specific position or the mean value of the detected values is selected according to the molding conditions.

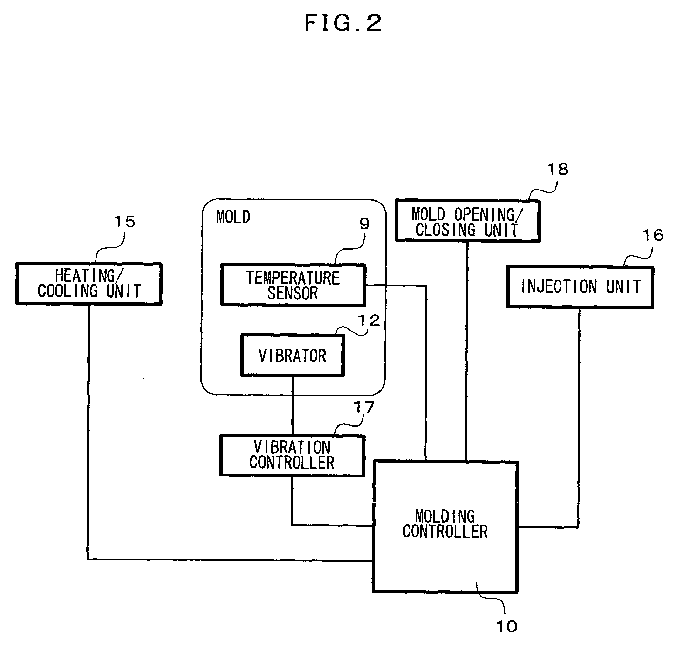

FIG. 2 shows a controller of a molding machine using this mold. A cavity temperature signal detected by the temperature sensor 9 is transmitted to a molding controller 10. The molding controller 10 controls a heating/cooling unit 15 to selectively pass heating water and cooling water at a predetermined temperature through the heating/cooling water channels 8, so that the temperature of the mold is controlled. Further, the molding controller 10 controls an injection unit 16 to control the injection of a required amount of polylactic resin into the cavity 5 and a pressure holding force. To be specific, the injection unit 16 includes a cylinder 13 for melting polylactic resin and injecting the polylactic resin into the cavity 5 from the nozzle 7, and an electric screw 14. The screw 14 in the cylinder 13 is rotated to feed polylactic resin to the front of the screw 14 and inject a required amount of the polylactic resin. The amount is determined by the molding controller 10. After the polylactic resin is injected into the cavity 5, the position of the screw 14 is so controlled as to have a pressure holding force determined by the molding controller 10. The vibrators 12 are controlled by the molding controller 10 via a vibration controller 17.

Polylactic resin may be poly(L-lactic acid), poly(D-lactic acid), a mixture of poly(L-lactic acid) and poly(D-lactic acid), or a copolymer of poly(L-lactic acid) and poly(D-lactic acid). Additives generally used for resin and including an antioxidant, impact modifier, antistatic agent, and pigment may be added to polylactic resin as long as the biodegradability and transparency are not reduced.

Regarding the transparency of polylactic resin, haze of 25% or less is acceptable when the polylactic resin has a thickness of 1 mm in an amorphous state. Haze of 20% or less is preferable. Haze is measured according to JIS K-7136. The smaller value of haze, the higher the transparency. Haze exceeding 25% does not allow the recognition of the content of a container and thus is not preferable.

Polylactic resin is crystallized at temperatures between the melting point and the glass transition point. When molten polylactic resin is cooled, the crystallization proceeds at temperatures from 55°C to 168°C, the melting point of the polylactic resin. The crystallization rate relatively increases between 100°C and 140°C.

Also when the crystallization rate is increased by adding a crystal nucleating agent such as talc, the crystallization rate relatively increases at 100°C to 140°C. Polylactic resin is crystallized when a primary crystal nucleus is formed and grown. Thus it is considered that the generation of a primary crystal nucleus of polylactic resin at 55°C to 168°C can increase the crystallization rate. After thorough study, it has been found that the crystallization rate is increased by adding vibrations of 10 kHz to 100 kHz to polylactic resin.

It is considered that the addition of vibrations of 10 kHz to 100 kHz to polylactic resin causes cavitation in the polylactic resin and the generation of the primary crystal nucleus is induced when the cavitation is crushed, so that the crystallization can be accelerated.

Although added vibrations can induce the generation of the primary crystal nucleus in polylactic resin, cavitation generated in the polylactic resin at that time may not be crushed but may be left as air bubbles, so that the molded body may have a poor appearance. Particularly, when vibrations are added at a temperature higher than 168°C, air bubbles noticeably appear.

Thus vibrations are added at temperatures from 55°C, the glass transition point of polylactic resin, to 168°C (the melting point of polylactic resin). After the addition of vibrations, a pressure holding force is applied to eliminate generated air bubbles, so that appearance defects can be reduced.

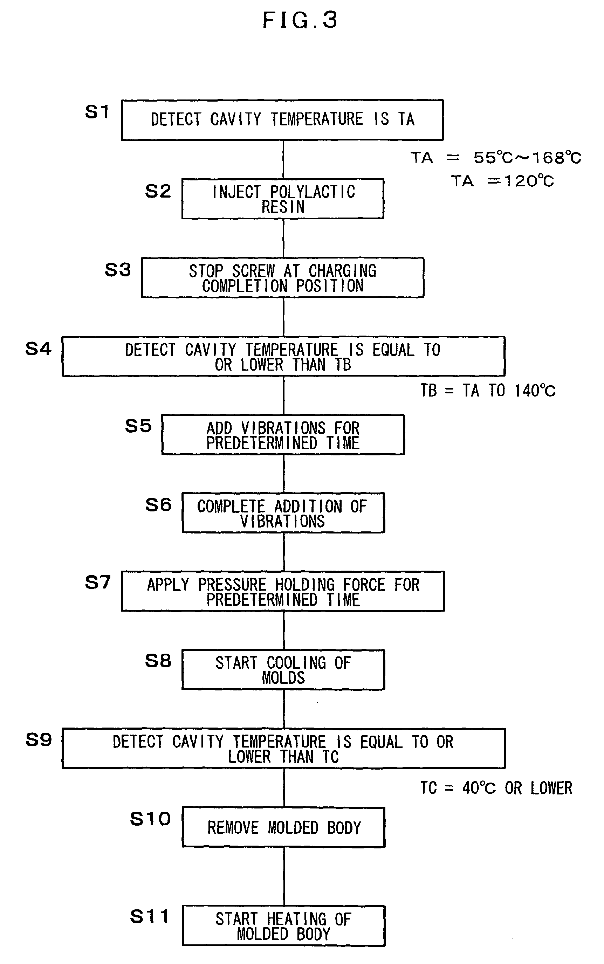

FIG. 3 shows the molding process of the molding controller 10.

In step S1, when the temperature sensor 9 detects that polylactic resin injected into the cavity 5 has a predetermined temperature TA ranging from 55°C to 168°C, an injection start signal is transmitted in step S2 to the injection unit 16 to inject the polylactic resin.

In step S3, the screw 14 is stopped at a charging completion position to complete charging. The screw 14 is kept at the charging completion position until the addition of vibrations is completed.

After the polylactic resin is injected into the cavity 5 and a cavity temperature rises once, when the temperature sensor 9 detects in step S4 that the temperature of the polylactic resin is equal to or lower than a predetermined temperature TB that ranges from 55°C to 168°C and is equal to or higher than TA, a vibration addition start signal is transmitted to the vibration controller 17 in step S5. In a vibration adding process, a vibration adding timer is set and vibrations are added to polylactic resin over a predetermined time. In an interval during which vibrations are added in step S4 and step S5, the temperature of polylactic resin is equal to or lower than a temperature at the completion of charging of polylactic resin.

In step S5, when it is detected that the vibration adding timer reaches a set time, a vibration addition completion signal is transmitted to the vibration controller 17 in step S6 to complete the addition of vibrations.

In a pressure holding process of step S7, a pressure holding switching signal is transmitted to the injection unit 16 to start pressure holding. Further, a pressure holding timer is set and a held pressure is applied to a molded body of polylactic resin for a predetermined time. A pressure holding force is controlled by moving the position of the screw 14 to the mold.

When it is detected that the pressure holding timer reaches a set time, a pressure holding completion signal is transmitted to the injection unit 16 to complete the pressure holding process.

In a cooling process of step S8, a heating/cooling switching signal is transmitted to the heating/cooling unit 15 and heating water having been fed into the heating/cooling water channels of the molds is replaced with cooling water to start cooling.

In step S9, when the cavity temperature falls and the temperature sensor 9 detects that the cavity temperature is equal to or lower than a predetermined temperature TC that is equal to or lower than the glass transition point of the polylactic resin, a signal is transmitted to a mold opening/closing unit 18 to open the molds and remove the molded body in step S10.

At the completion of removal of the molded body, in step S11, cooling water having been fed into the heating/cooling water channels 8 of the molds is replaced with heating water to start heating. These steps are repeated.

The following will discuss a more specific example of the molding method of polylactic resin according to the present invention, and a comparative example to be compared with the specific example.

(Example)

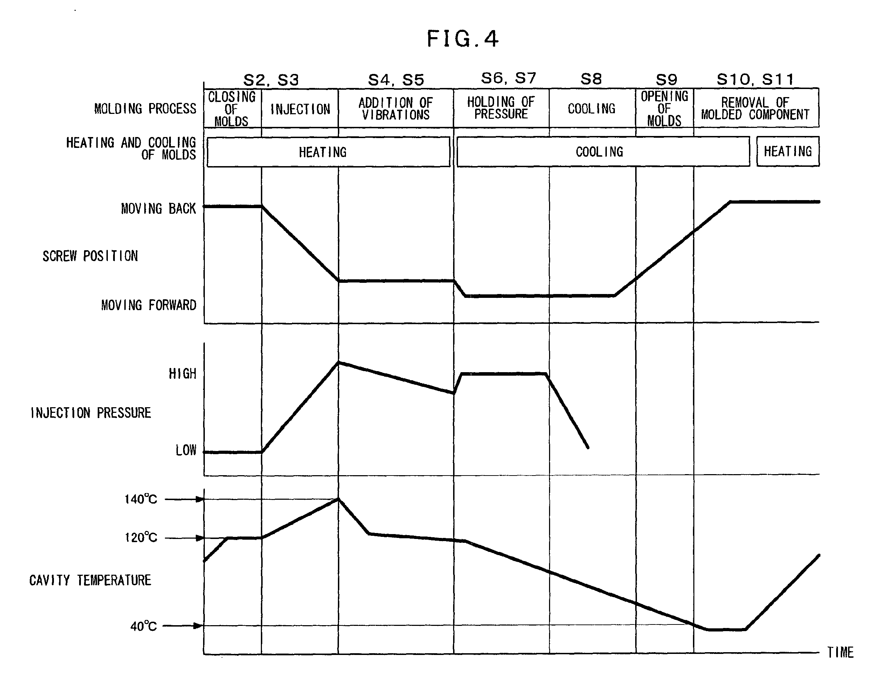

FIG. 4 shows an example of a screw position, an injection pressure, and a cavity temperature in the steps of the specific example.

A container made of polylactic resin with a length of 100 mm, a width of 60 mm, a depth of 10 mm, and a thickness of 1 mm was prepared. Polylactic resin was poly(L-lactic acid) having a melting point of 168°C and a glass transition point of 55°C. Heating water was supplied into the heating/cooling water channels 8 of the molds, the cavity temperature TA was set at 120°C, resin melted at 190°C was injected into the cavity 5, and the screw 14 was kept at the charging completion position. When the cavity temperature falls to TB = 140°C, the addition of vibrations was started. While the cavity temperature was kept at 140°C to 120°C, the vibrators 12 were vibrated at 30 kHz to vibrate positions corresponding to the outer wall 20a of the molded body 20 for three minutes. The vibrators 12 were stopped and the process was switched to a pressure holding process to apply a pressure holding force to polylactic resin. The supply of the heating water into the heating/cooling water channels 8 of the molds was stopped and cooling water was supplied.

The molded body 20 was removed at the cavity temperature of 40°C.

A heat resistance test was conducted on the molded body 20 obtained thus. After the molded body 20 was held in a constant temperature oven at 65°C for 24 hours, the amount of deformation of the molded body 20 was measured. The amount of deformation of the molded body 20 was less than 5% in length, width, and depth, showing high heat resistance.

Regarding the transparency of the molded body 20, the bottom 20b had haze of 14% and the outer wall 20a had haze of 35%. Thus the bottom 20b had high transparency.

The following is a comparative example which is an experimental result for comparison with the aforementioned example of the present invention.

(Comparative Example)

In this comparative example, a container made of polylactic resin with a length of 100 mm, a width of 60 mm, a depth of 10 mm, and a thickness of 1 mm was prepared as in the aforementioned example. Polylactic resin was poly(L-lactic acid).

Cooling water was supplied into the heating/cooling water channels 8 of the molds, the cavity temperature was set at 40°C, and resin melted at 190°C was injected into the cavity 5. Thereafter, the process was switched to a pressure holding process and the molded body 20 was removed at the cavity temperature of 40°C.

A heat resistance test was conducted on the molded body 20 obtained thus. After the molded body 20 was held in a constant temperature oven at 65°C for 24 hours, the amount of deformation of the molded body 20 was measured. The amount of deformation of the molded body 20 was equal to or larger than 5% in length, width, and depth, showing lower heat resistance. Regarding the transparency of the molded body 20, the bottom 20b had haze of 10% and the outer wall 20a had haze of 10%. Thus both of the bottom 20b and the outer wall 20a had high transparency.

Positions where the vibrators 12 added vibrations to polylactic resin through the horns 11 were set on the outer wall 20a. Transparency is not required on these positions when the molded body 20 is formed. Thus positions for accelerating the crystallization of polylactic resin injected into the cavity are not limited to the outer wall 20a.

(Second Embodiment)

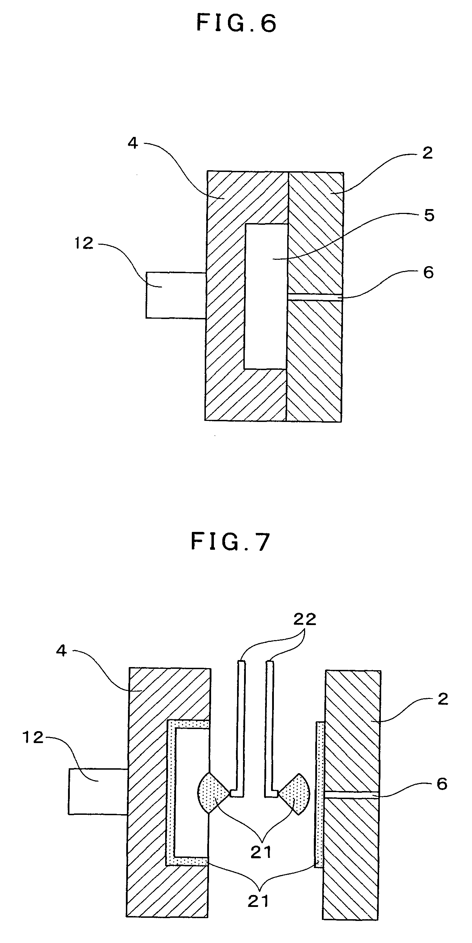

FIG. 6 is a schematic sectional view showing a molding device for implementing a molding method of polylactic resin according to a second embodiment of the present invention.

The molding device has a stationary mold 2, a movable mold 4, a sprue 6, a cavity 5, and a vibrator 12. The vibrator 12 can vibrate the movable mold 4 at 10 Hz to 60 KHz. The sprue 6 of the stationary mold 2 is connected to an injection mechanism (not shown) for injecting resin for molding into the cavity 5. The stationary mold 2 and the movable mold 4 may include temperature changing devices (not shown) for keeping at the crystallization temperature the resin injected into the cavity 5 and cooling the resin when the resin is removed from the stationary mold 2 and the movable mold 4. The temperature changing devices provided in the stationary mold 2 and the movable mold 4 may be heaters for applying heat or passages for passing a cooling medium.

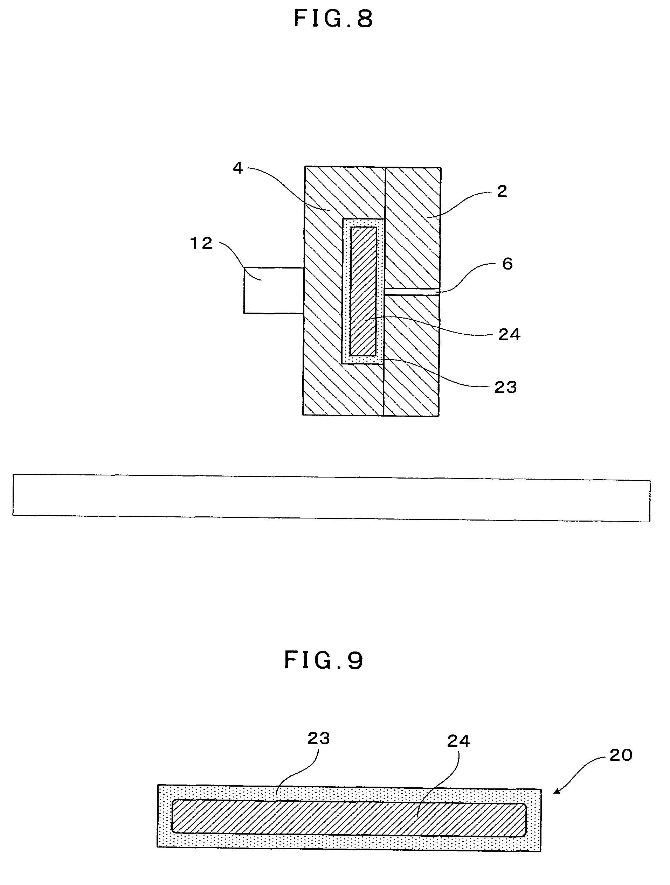

Referring to FIGS. 7 and 8, the following will describe the molding method of polylactic resin according to the second embodiment of the present invention using the molding device of FIG. 6.

Polylactic resin in the second embodiment of the present invention is a plant-derived resin that is one of crystalline resins regarded as being desirable from an environmental point of view. A crystal nucleating agent, an inorganic filler, a fire retardant, and other additives such as an antioxidant, impact modifier, antistatic agent, and pigment which are generally used for resin may be added to polylactic resin used for a molded body. The crystal nucleating agent may be talc, kaoline, silica, and an inorganic compound such as boron nitride, an inorganic mineral such as clay composed of a silicate mineral, a specific amide compound, a sorbitol derivative, a phosphate metal salt, a melamine compound salt, and so on.

FIG. 7 shows that paint containing a crystal nucleating agent is applied. Paint 21 containing the crystal nucleating agent is sprayed and applied onto surfaces of the stationary mold 2 and the movable mold 4 with spray nozzles 22, the surfaces making contact with molten crystalline resin.

The paint 21 contains at least the crystal nucleating agent, a binder resin, and a solvent. As has been discussed, the crystal nucleating agent may be talc, kaoline, silica, and an inorganic compound such as boron nitride, an inorganic mineral such as clay composed of a silicate mineral, a specific amide compound, a sorbitol derivative, a phosphate metal salt, a melamine compound salt, and so on. The binder resin may be the aforementioned polylactic resin. The paint 21 can be used by mixing the binder resin with the crystal nucleating agent and dissolving or dispersing the mixture in the solvent. The binder resin has the function of bonding the crystal nucleating agent onto the surfaces of the stationary mold 2 and the movable mold 4, the surfaces making contact with molten polylactic resin. The applied paint 21 that contains the crystal nucleating agent and is sprayed with the spray nozzles 22 varies in thickness with the mixing ratio of the crystal nucleating agent, the binder resin, and the solvent. For example, a thickness of 0.015 mm to 1.0 mm is desirable for a mixture of 10 wt% of talc, 10 wt% of polylactic resin, 45 wt% of methyl ethyl ketone, and 35 wt% of toluene. The applied paint 21 is 0.005 mm to 0.2 mm in thickness in a state in which the volatile components of the solvent and so on are evaporated. When the thickness is smaller than 0.005 mm, the crystal nucleating agent cannot be applied on a part of the surfaces. When the thickness exceeds 0.2 mm, the paint 21 becomes difficult to apply any more and may have an uneven thickness.

Next, the stationary mold 2 and the movable mold 4 are heated and are controlled by temperature changing devices so as to be kept at the crystallization temperature. The crystallization temperature can be set at a temperature ranging from the glass transition point to the melting point of the polylactic resin. The crystallization temperature of the polylactic resin is set at a temperature between 60°C and 160°C. The crystallization temperature is preferably set at a temperature between 80°C and 140°C, at which crystallization proceeds fast, to have a short retention time.

Next, the stationary mold 2 and the movable mold 4 are closed and the molten polylactic resin is injected into the cavity 5. The polylactic resin can be injected after being melted at 170°C to 260°C. The temperature of the molten polylactic resin injected into the cavity 5 decreases to the crystallization temperature. After that, the polylactic resin is kept at the crystallization temperature for a predetermined time. The polylactic resin comes into contact with the paint 21 having been applied onto the stationary mold 2 and the movable mold 4, so that crystallization proceeds faster in a surface layer portion 23 than in a central portion 24. At this moment, the paint 21 is absorbed into the surface layer portion 23 of a molded body 20. FIG. 8 is a schematic drawing showing the molded body 20 in the molding device.

In this way, the crystallization rate is increased by bringing the high-concentration crystal nucleating agent into contact with the polylactic resin, so that the molded body can be obtained in a short time.

Further, it is considered that when the polylactic resin is kept at the crystallization temperature, vibrations at 10 kHz to 60 kHz are applied to the movable mold 4 by means of the vibrator 12 and the vibrations are transmitted to the polylactic resin through the movable mold 4. Thus a number of crystals are generated and the crystallization is accelerated. Although vibrations are preferably applied at least while the polylactic resin is kept at the crystallization temperature, vibrations may be applied in the process of injecting the polylactic resin into the cavity 5 or in a cooling process after the polylactic resin is kept at the crystallization temperature. It is considered that by applying vibrations to the movable mold 4, the vibrations are transmitted to the polylactic resin in the cavity 5. Thus the crystallization is accelerated, the crystallization rate is increased, and the molded body can be obtained in a short time.

Thereafter, the stationary mold 2 and the movable mold 4 are cooled to a temperature around room temperature, and then the molded body 20 is removed. In the molded body 20 removed thus, the degree of crystallinity of the surface layer portion 23 is higher than that of the central portion 24, so that the molded body 20 of polylactic resin can be obtained with higher strength and heat resistance.

FIG. 9 is a sectional view showing the molded body 20 of polylactic resin. The molded body 20 is molded by the molding method of polylactic resin according to the present invention. The molded body 20 is varied in shape for each product and the thickness of the main portion ranges from 1 to 5 mm. FIG. 9 shows the molded body 20 shaped like a plate as an example. In FIG. 9, reference numeral 23 denotes the surface layer portion and reference numeral 24 denotes the central portion. The surface layer portion 23 is about 0.3 mm in depth from the surface of the molded body 20 and the central portion 24 is disposed inside the surface layer portion 23.

The degree of crystallinity of the surface layer portion 23 is relatively higher than that of the central portion 24. The degree of crystallinity may change step-by-step or like a slope from the surface layer portion 23 to the central portion 24. Regarding the degrees of crystallinity of the surface layer portion 23 and the central portion 24, the samples of the surface layer portion 23 and the central portion 24 are collected, the samples are heated from 20°C to 200°C by means of a differential thermal analyzer (DSC) in a temperature rise condition of 10°C/minute in an atmosphere of nitrogen, and the heat quantity of temperature rising crystallization and the heat quantity of crystal fusion are measured. The degree of crystallinity can be calculated based on 93.1 J/g, the theoretical crystal fusion heat quantity of polylactic resin, according to the equation below:

$$\text{Degree of crystallinity (\%)} = (B-A)/93.1 \times 100$$

where A represents an absolute value of the heat quantity of temperature rising crystallization and B represents an absolute value of the heat quantity of crystal fusion.

Crystallization increases the strength and heat resistance of the polylactic resin and constricts the polylactic resin. Since the surface layer portion 23 has a higher degree of crystallinity than the central portion 24, the surface layer portion 23 is constricted larger than the central portion 24 and thus a compressive stress is applied, thereby increasing the strength and heat resistance of the molded body 20. The surface layer portion 23 preferably has a degree of crystallinity of at least 15% and the central portion 24 preferably has a degree of crystallinity lower than that of the surface layer portion 23 by at least 5%.

A preferred example of the second embodiment will be described below.

First, 10 wt% of talc, 10 wt% of polylactic resin, 45 wt% of methyl ethyl ketone, and 35 wt% of toluene were sufficiently mixed to prepare paint containing talc acting as a crystal nucleating agent to be applied to the stationary mold 2 and the movable mold 4. The paint containing the crystal nucleating agent was applied to the surfaces of the stationary mold 2 and the movable mold 4 until the thickness of the paint reached 0.05 mm to 0.15 mm, the surfaces forming the cavity 5. Meanwhile, the paint was sprayed from the spray nozzles 22 moved at a constant speed. At this moment, a plate serving as a mask was disposed on a part other than the cavity 5 to prevent the adhesion of the paint containing the crystal nucleating agent. The stationary mold 2 and the movable mold 4 were heated to 115°C to evaporate methyl ethyl ketone and toluene that were contained in the crystal nucleating agent serving as a painting solution. Additionally, the measured thickness of a coated film ranged from 0.01 mm to 0.03 mm. The stationary mold 2 and movable mold 4 kept at 115°C were closed, resin obtained by mixing 2 wt% of talc as a crystal nucleating agent with polylactic resin was melted at 200°C, and the resin was injected into the cavity 5. After the resin was kept at 115°C for 30 seconds, the stationary mold 2 and the movable mold 4 were cooled to 50°C and were opened, and a molded component having a length of 80 mm, a width of 10 mm, and a thickness of 4 mm was removed. The molded component removed thus will be referred to as a molded component A.

The bending strength of the molded component A was 90 MPa according to the regulations of American Society for Testing and Materials (ASTM). The deflection temperature was 65°C under a light load (0.45 MPa). The surface layer portion at the depth of 0.2 mm to 0.3 mm from the surface of the molded body 20 had a degree of crystallinity of 43% and the central portion at the depth of 1 mm to 2 mm from the surface had a degree of crystallinity of 30%.

Next, 10 wt% of talc, 10 wt% of polylactic resin, 45 wt% of methyl ethyl ketone, and 35 wt% of toluene were sufficiently mixed to prepare paint containing talc acting as a crystal nucleating agent to be applied to the stationary mold 2 and the movable mold 4. The paint 21 containing the crystal nucleating agent was applied to the surfaces of the stationary mold 2 and the movable mold 4 until the thickness of the paint reached 0.05 mm to 0.15 mm, the surfaces forming the cavity 5. Meanwhile, the paint was sprayed from the spray nozzles 22 moved at a constant speed. At this moment, on a part other than the cavity 5, a plate serving as a mask was disposed to prevent the adhesion of the paint containing the crystal nucleating agent. The stationary mold 2 and the movable mold 4 were heated to 115°C to evaporate methyl ethyl ketone and toluene that were contained in the paint containing the crystal nucleating agent. Additionally, the measured thickness of a coated film ranged from 0.01 mm to 0.03 mm. The stationary mold 2 and movable mold 4 kept at 115°C were closed, resin obtained by mixing 2 wt% of talc as a crystal nucleating agent with polylactic resin was melted at 200°C, and the resin was injected into the cavity 5. After the resin was kept at 115°C for 30 seconds while vibrations at 30 kHz were applied to the movable mold 4 by means of the vibrator 12, the stationary mold 2 and the movable mold 4 were cooled to 50°C and were opened, and a molded component having a length of 80 mm, a width of 10 mm, and a thickness of 4 mm was removed. The molded component removed thus will be referred to as a molded component B.

The bending strength of the molded component B was 95 MPa according to the regulations of ASTM. The deflection temperature was 70°C under a heavy load (1.8 MPa). The surface layer portion at the depth of 0.2 mm to 0.3 mm from the surface of the molded body 20 had a degree of crystallinity of 51% and the central portion at the depth of 1 mm to 2 mm from the surface had a degree of crystallinity of 42%.

Next, the stationary mold 2 and movable mold 4 kept at 115°C were closed, resin obtained by mixing 2 wt% of talc as a crystal nucleating agent with polylactic resin was melted at 200°C, and the resin was injected into the cavity 5. After the resin was kept at 115°C for 30 seconds, the stationary mold 2 and the movable mold 4 were cooled to 50°C and were opened, and a molded component having a length of 80 mm, a width of 10 mm, and a thickness of 4 mm was removed. The molded component removed thus will be referred to as a molded component C.

The bending strength of the molded component C was 75 MPa according to the regulations of ASTM. The deflection temperature was 55°C under a heavy load (1.8 MPa). The surface layer portion 23 at the depth of 0.2 mm to 0.3 mm from the surface of the molded body 20 had a degree of crystallinity of 5% and the central portion at the depth of 1 mm to 2 mm from the surface had a degree of crystallinity of 5%.

Next, the stationary mold 2 and movable mold 4 kept at 115°C were closed, resin obtained by mixing 2 wt% of talc as a crystal nucleating agent with polylactic resin was melted at 200°C, and the resin was injected into the cavity 5. After the resin was kept at 115°C for 60 seconds, the stationary mold 2 and the movable mold 4 were cooled to 50°C and were opened, and a molded component 20 having a length of 80 mm, a width of 10 mm, and a thickness of 4 mm was removed. The molded component removed thus will be referred to as a molded component D.

The bending strength of the molded component D was 80 MPa according to the regulations of ASTM. The deflection temperature was 60°C under a heavy load (1.8 MPa). The surface layer portion 23 at the depth of 0.2 mm to 0.3 mm from the surface of the molded body 20 had a degree of crystallinity of 30% and the central portion 24 at the depth of 1 mm to 2 mm from the surface had a degree of crystallinity of 30%.

Finally, the stationary mold 2 and movable mold 4 kept at 115°C were closed, resin obtained by mixing 2 wt% of talc as a crystal nucleating agent with polylactic resin was melted at 200°C, and the resin was injected into the cavity 5. After the resin was kept at 115°C for 30 seconds while vibrations at 30 kHz were applied to the movable mold 4 by means of the vibrator 12, the stationary mold 2 and the movable mold 4 were cooled to 50°C and were opened, and the molded component 20 having a length of 80 mm, a width of 10 mm, and a thickness of 4 mm was removed. The molded component removed thus will be referred to as a molded component E.

The bending strength of the molded component E was 85 MPa according to the regulations of ASTM. The deflection temperature was 63°C under a heavy load (1.8 MPa). The surface layer portion 23 at the depth of 0.2 mm to 0.3 mm from the surface of the molded body 20 had a degree of crystallinity of 41% and the central portion 24 at the depth of 1 mm to 2 mm from the surface had a degree of crystallinity of 41%.

Table 1 below shows the molding conditions of the molded components A to E and the degrees of crystallinity of the surface layer portions 23 and the central portions 24 of the molded body 20 obtained thus.

In order to decide whether or not the molded body 20 has a high strength and high heat resistance, it was decided whether the molded components A to E are preferable or not. The molded components A to E were judged to be preferable when the degrees of crystallinity of the surface layer portion 23 and the central portion 24 were at least 15% or when the degree of crystallinity of the surface layer portion 23 was at least 15% and the degree of crystallinity of the central portion 24 was lower than that of the surface layer portion 23 by at least 5%.

(Table 1)

| Sample | Molded Component A | Molded Component B | Molded Component C | Molded Component D | Molded Component E |
|---|---|---|---|---|---|
| Paint containing crystal nucleating agent | Present | Present | Absent | Absent | Absent |
| Retention time | 30 sec. | 30 sec. | 30 sec. | 60 sec. | 30 sec. |
| Vibrations | Absent | Present | Absent | Absent | Present |
| Degree of crystallinity on surface layer portion of molded body | 43% | 51 % | 5% | 30% | 41% |
| Degree of crystallinity on central portion of molded body | 30% | 42% | 5% | 30% | 41% |
| Preferable molded component | Good | Good | Poor | Fair | Good |

Table 1 shows that the molded component A, the molded component B, the molded component D, and the molded component E are preferable. The molded component D has, however, a longer retention time than the other preferable molded components, so that the productivity of the molded component decreases. Further, comparing the molded component A and the molded component B, the molded component B in which the molded body 20 has a high degree of crystallization is different from the molded component A in the molding conditions such that vibrations are applied to the mold. Thus it is understood that vibrations applied to the mold accelerate the crystallization of polylactic resin.

As has been discussed, as a molding method of obtaining a preferable molded component in a short time, the molding methods of obtaining the molded component A, the molded component B, and the molded component E are preferable.

As has been discussed, the adoption of the present invention makes it possible to mold a molded body of polylactic resin with a high strength and high heat resistance in a short time.

Industrial Applicability

The present invention makes it possible to mold various molded bodies of polylactic resin and contribute to the solutions to waste problems and global warming that have become social issues.

## Claims

1. A molding method of polylactic resin, comprising:

    charging molten polylactic resin into a cavity formed of molds;
    adding vibrations to the polylactic resin having been injected into the cavity, when the polylactic resin having been injected into the cavity has a temperature ranging from a glass transition point to a melting point of the polylactic resin; and
    applying a held pressure to the polylactic resin in the cavity after addition of vibrations is completed.

2. The molding method of polylactic resin according to claim 1, wherein the temperature at which the vibrations are added to the polylactic resin having been injected into the cavity ranges from 100°C to a temperature at which charging of the polylactic resin is completed.

3. The molding method of polylactic resin according to one of claims 1 and 2, wherein the vibrations at 10 kHz to 100 kHz are added.

4. The molding method of polylactic resin according to any one of claims 1 to 3, wherein the vibrations are added on positions for accelerating crystallization of the polylactic resin having been injected into the cavity.

5. The molding method of polylactic resin according to claim 4, wherein the vibrations are added on the positions corresponding to an outer wall of a molded body formed of the polylactic resin having been injected into the cavity.

6. The molding method of polylactic resin according to any one of claims 1 to 5, further comprising: forming paint containing a crystal nucleating agent on mold surfaces forming the cavity.

7. The molding method of polylactic resin according to claim 6, wherein the crystal nucleating agent is one of talc, kaoline, silica, and boron nitride.

8. A molding method of polylactic resin, comprising:

    charging molten polylactic resin into molds on which paint containing a crystal nucleating agent is formed, the paint being formed on mold surfaces forming a cavity for molding a molded body; and
    holding the injected polylactic resin by the molds.

9. The molding method of polylactic resin according to claim 8, wherein the injected polylactic resin is held by the molds while vibrations are added to the mold.

10. The molding method of polylactic resin according to one of claims 8 and 9, wherein the crystal nucleating agent is one of talc, kaoline, silica, and boron nitride.

## Patentansprüche

1. Formverfahren für Polymilchsäureharz, umfassend:

    das Eintragen von geschmolzenem Polymilchsäureharz in einen aus Formen gebildeten Hohlraum;
    das Einwirkenlassen von Vibrationen auf das Polymilchsäureharz, welches in den Hohlraum eingespritzt worden ist, wenn das in den Hohlraum eingespritzte Polymilchsäureharz eine Temperatur im Bereich von einem Glasübergangspunkt bis zu einem Schmelzpunkt des Polymilchsäureharzes aufweist; und
    das Anlegen eines Haltedrucks an das Polymilchsäureharz in dem Hohlraum, nachdem die Einwirkung von Vibrationen beendet ist.

**2.** Formverfahren für Polymilchsäureharz nach Anspruch 1, wobei die Temperatur, bei der die Vibrationen auf das Polymilchsäureharz, das in den Hohlraum eingespritzt worden ist, einwirken gelassen werden, im Bereich von 100 °C bis zu einer Temperatur liegt, bei der das Eintragen des Polymilchsäureharzes beendet ist.

**3.** Formverfahren für Polymilchsäureharz nach einem der Ansprüche 1 und 2, wobei die Vibrationen mit 10 kHz bis 100 kHz einwirken gelassen werden.

**4.** Formverfahren für Polymilchsäureharz nach einem der Ansprüche 1 bis 3, wobei die Vibrationen an Positionen zum Beschleunigen der Kristallisation des Polymilchsäureharzes, das in den Hohlraum eingespritzt worden ist, einwirken gelassen werden.

**5.** Formverfahren für Polymilchsäureharz nach Anspruch 4, wobei die Vibrationen an den Positionen einwirken gelassen werden, die einer Außenwand eines Formkörpers entsprechen, der aus dem Polymilchsäureharz gebildet ist, das in den Hohlraum eingespritzt worden ist.

**6.** Formverfahren für Polymilchsäureharz nach einem der Ansprüche 1 bis 5, außerdem umfassend: das Bilden eines Anstrichs, der einen Kristallkeimbildner enthält, auf Formoberflächen, welche den Hohlraum bilden.

**7.** Formverfahren für Polymilchsäureharz nach Anspruch 6, wobei der Kristallkeimbildner ausgewählt ist aus Talk, Kaolin, Siliciumdioxid und Bornitrid.

**8.** Formverfahren für Polymilchsäureharz, umfassend:

das Eintragen von geschmolzenem Polymilchsäureharz in Formen, auf denen ein Anstrich, der einen Kristallkeimbildner enthält, gebildet ist, wobei der Anstrich auf Formoberflächen gebildet ist, die einen Hohlraum zum Formen eines Formkörpers bilden; und das Halten des eingespritzten Polymilchsäureharzes durch die Formen.

**9.** Formverfahren für Polymilchsäureharz nach Anspruch 8, wobei das eingespritzte Polymilchsäureharz durch die Formen gehalten wird, während Vibrationen auf die Form einwirken gelassen werden.

**10.** Formverfahren für Polymilchsäureharz nach einem der Ansprüche 8 und 9, wobei der Kristallkeimbildner ausgewählt ist aus Talk, Kaolin, Siliciumdioxid und Bornitrid.

**Revendications**

**1.** Procédé de moulage de résine polylactique comprenant :

le chargement d'une résine polylactique fondue dans une cavité formée de moules ; l'addition de vibrations à la résine polylactique ayant été injectée dans la cavité, lorsque la résine polylactique ayant été injectée dans la cavité possède une température comprise entre le point de transition vitreuse et le point de fusion de la résine polylactique ; et l'application d'une pression de maintien à la résine polylactique dans la cavité après que l'addition des vibrations est terminée.

**2.** Procédé de moulage de résine polylactique selon la revendication 1, dans lequel la température à laquelle les vibrations sont ajoutées à la résine polylactique ayant été injectées dans la cavité s'étend de 100 °C jusqu'à une température à laquelle le chargement de la résine polylactique est terminé.

**3.** Procédé de moulage de résine polylactique selon l'une des revendications 1 et 2, dans lequel des vibrations de 10 kHz jusqu'à 100 kHz sont ajoutées.

**4.** Procédé de moulage de résine polylactique selon l'une quelconque des revendications 1 à 3, dans lequel les vibrations sont ajoutées dans des positions d'accélération de la cristallisation de la résine polylactique ayant été injectée dans la cavité.

**5.** Procédé de moulage de résine polylactique selon la revendication 4, dans lequel les vibrations sont ajoutées dans les positions correspondants à la paroi extérieure d'un corps moulé formé de la résine polylactique ayant été injectée dans la cavité.

6. Procédé de moulage de résine polylactique selon l'une quelconque des revendications 1 à 5, comprenant en outre : la formation d'une peinture contenant un agent de nucléation de cristaux sur les surfaces de moule formant la cavité.

7. Procédé de moulage de résine polylactique selon la revendication 6, dans lequel l'agent de nucléation de cristaux est un agent parmi du talc, du kaolin, de la silice et du nitrure de bore.

8. Procédé de moulage de résine polylactique comprenant :

le chargement d'une résine polylactique fondue dans des moules sur lesquelles une peinture contenant un agent de nucléation de cristaux est formée, la peinture étant formée sur des surfaces de moule formant une cavité pour mouler un corps moulé ; et
le maintien de la résine polylactique injectée par les moules.

9. Procédé de moulage de résine polylactique selon la revendication 8, dans lequel la résine polylactique injectée est maintenue par les moules pendant que des vibrations sont ajoutées au moule.

10. Procédé de moulage de résine polylactique selon l'une des revendications 8 et 9, dans lequel l'agent de nucléation de cristaux est un agent parmi du talc, du kaolin, de la silice et du nitrure de bore.

# FIG.1A

# FIG.1B

# FIG.2

# FIG.3

S1 | DETECT CAVITY TEMPERATURE IS TA

TA = 55°C～168°C

TA ＝120°C

S2 | INJECT POLYLACTIC RESIN

S3 | STOP SCREW AT CHARGING COMPLETION POSITION

S4 | DETECT CAVITY TEMPERATURE IS EQUAL TO OR LOWER THAN TB

TB = TA TO 140°C

S5 | ADD VIBRATIONS FOR PREDETERMINED TIME

S6 | COMPLETE ADDITION OF VIBRATIONS

S7 | APPLY PRESSURE HOLDING FORCE FOR PREDETERMINED TIME

S8 | START COOLING OF MOLDS

S9 | DETECT CAVITY TEMPERATURE IS EQUAL TO OR LOWER THAN TC

TC = 40°C OR LOWER

S10 | REMOVE MOLDED BODY

S11 | START HEATING OF MOLDED BODY

# FIG.4

| MOLDING PROCESS | S2, S3 | | S4, S5 | S6, S7 | S8 | S9 | S10, S11 |
|---|---|---|---|---|---|---|---|
| | CLOSING OF MOLDS | INJECTION | ADDITION OF VIBRATIONS | HOLDING OF PRESSURE | COOLING | OPENING OF MOLDS | REMOVAL OF MOLDED COMPONENT |

HEATING AND COOLING OF MOLDS: HEATING — COOLING — HEATING

SCREW POSITION: MOVING BACK / MOVING FORWARD

INJECTION PRESSURE: HIGH / LOW

CAVITY TEMPERATURE: 140°C, 120°C, 40°C

TIME

EP 1 925 420 B1

# FIG.5

# FIG.6

# FIG.7

# FIG.8

# FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8003432 A
- JP 2005200600 A
- JP 2006182994 A
- JP 2005169925 A
- EP 1460107 A